# EUROPÄISCHE PATENTSCHRIFT

(11) **EP 3 559 527 B1**
(45) Veröffentlichungstag und Bekanntmachung des Hinweises auf die Patenterteilung: **10.03.2021**
(21) Anmeldenummer: 17825788.7
(22) Anmeldetag: 13.12.2017
(51) Int. Cl.: F16K 39/02, F02B 37/16, F16K 31/06, F16K 1/46

(54) **VENTIL**
VALVE
VANNE

(30) Priorität: 22.12.2016 DE 102016226127
(43) Veröffentlichungstag der Anmeldung: 30.10.2019
(73) Patentinhaber: Vitesco Technologies GmbH, 30165 Hannover (DE)
(72) Erfinder: BONANNO, Rosario, 65812 Bad Soden (DE)
(86) Internationale Anmeldenummer: PCT/EP2017/082715
(87) Internationale Veröffentlichungsnummer: WO 2018/114547

(56) Entgegenhaltungen:
- WO-A1-2015/066581
- WO-A1-2016/041659
- AU-B2- 575 076
- DE-A1-102014 226 885
- DE-B3-102014 113 540
- DE-B3-102015 107 034
- DE-C1- 19 836 865
- JP-A- 2013 083 339

## Beschreibung

Gegenstand der Erfindung ist ein Ventil mit einem Gehäuse, einem in dem Gehäuse angeordneten Solenoid, einem von dem Solenoid bewegbaren Stift und einem mit dem Stift verbundenen Kolben. Solche Ventile werden unter anderem als Schubumluftventil am Turbolader in Kraftfahrzeugen eingesetzt, um im Schubbetrieb einen Bypass zur Saugseite freizugeben und sind somit bekannt. Um ein zu starkes Abbremsen des Turboladers zu verhindern, aber auch ein schnelles Anfahren zu gewährleisten, ist ein schnelles Öffnen und Schließen des Ventils eine wesentliche Voraussetzung. Insbesondere beim Schließen kommt es auf das sofortige Verschließen durch das Anlegen des Kolbens an einen Ventilsitz an. Der Kolben ist daher aus Gewichtsgründen aus Kunststoff ausgebildet. Der Ventilsitz wird vom Gehäuse des Turboladers gebildet, an dem das Ventil angeflanscht wird. Aufgrund der über die Lebensdauer erforderlichen hohen Anzahl von Schließzyklen und die betriebsbedingten Temperaturbelastungen werden an den Kunststoff und die Ausgestaltung des Kolbens, insbesondere im Bereich der Dichtkante hohe Anforderungen an das Bauteil gestellt. Die Kosten für derartige Kolben sind dementsprechend. Zudem kommt es in Einzelfällen zu einer nachlassenden Dichtwirkung über die Lebenszeit.

Beispielsweise zeigt die DE 10 2014 113540 B3 ein Ventil mit einem Gehäuse, einem Solenoid, einem mit einem Stift verbundenen Kolben mit einer Dichtung.

Der Erfindung liegt daher die Aufgabe zugrunde, ein Ventil mit verbesserter Dichtfunktion über die Lebenszeit zu schaffen. Das Ventil soll dabei kostengünstig sein.

Gelöst wird die Aufgabe dadurch, dass der Kolben aus Metall besteht und eine Dichtung aus einem vom Kolben verschiedenen Material besitzt, wobei die Dichtung im Bodenbereich des Kolbens angeordnet ist, das Metall des Kolbens eine Dicke von 0,3 mm bis 0,8 mm besitzt und die Dichtung ringförmig ausgebildet ist und an ihrer der Dichtfläche abgewandten Seite mindestens 3 Anformungen besitzt, die Ausnehmungen durchdringen, die im Boden des Kolbens angeordnet sind.

Die Ausbildung des Kolbens aus Metall mit der im Bodenbereich angeordneten Dichtung ermöglicht die Trennung der Funktion des Abdichtens vom eigentlichen Kolben. Dies ermöglicht eine einzig auf die Dichtfunktion ausgerichtete Gestaltung der Dichtung, so dass die Dichtfunktion verbessert wird. Gleichzeitig kann dadurch der Kolben einfacher gestaltet werden, wodurch seine Herstellung kostengünstig ist. Die deutlich verringerte Komplexität des Kolbens, insbesondere im Bodenbereich erlaubt die Herstellung des Kolbens mittels Tiefziehens. Ein Metallkolben hat zudem den Vorteil einer höheren Temperaturbeständigkeit, so dass das erfindungsgemäße Ventil ein breiteres Einsatzgebiet, insbesondere bei höheren Temperaturen, abdecken kann.

Eine größere Beständigkeit gegenüber aggressiven Medien und damit eine längere Lebensdauer sind gegeben, wenn der Kolben aus Edelstahl, vorzugsweise einem Chrom-Nickel-Stahl, besteht. Eine gute Medienbeständigkeit wird bei der Dichtung dadurch erreicht, dass als Dichtungsmaterial ein Gummi, vorzugsweise Ethylen-Propylen-Dien-Kautschuk (EPDM), oder ein Kunststoff, vorzugsweise Polyphthalamid (PPA), verwendet wird. Sowohl Gummi als auch Kunststoff eignen sich gut zur Abdichtung gegenüber metallischen Ventilsitzen. Zudem können sie Lageungenauigkeiten, aufgrund von Toleranzen oder übe die Lebensdauer ausgleichen.

Die Verbindung der Dichtung mit dem Kolben gestaltet sich besonders einfach, wenn die Dichtung ringförmig ausgebildet ist und an ihrer der Dichtfläche abgewandten Seite mindestens 3, vorzugsweise 4 bis 12 und insbesondere 5 bis 8 Anformungen besitzt, die Ausnehmungen durchdringen, die im Boden des Kolbens angeordnet sind. Aufgrund der Elastizität des Dichtungsmaterials können die Anformungen einen geringfügig größeren Querschnitt als die Ausnehmungen aufweisen, durch die sie bei der Montage der Dichtung hindurchtreten. Auf diese Weise lässt sich die Dichtung mit dem Kolben verbinden und wird dennoch sicher am Kolben gehalten.

Ein noch sicherer Schutz gegen ein Lösen der Dichtung vom Kolben wird gemäß einer anderen vorteilhaften Ausgestaltung dadurch erreicht, dass die Anformungen an ihrem freien Ende eine mit der Herstellung der Dichtung, insbesondere Spritzgießen oder Vulkanisieren oder durch nachträgliches Heißverstemmen erzeugbare Materialanhäufung aufweisen, wobei die Materialanhäufung einen Hinterschnitt zu der jeweiligen Ausnehmung im Kolben bildet.

In einer anderen Ausgestaltung lässt sich die Dichtung dadurch am Boden des Kolbens anordnen, dass der Kolben im Bereich des Bodens eine nach innen gerichtete Umbördelung besitzt, dass die Dichtung an dieser Umbördelung anliegt, dass auf der der Umbördelung abgewandten Seite der Dichtung ein den Boden des Kolbens bildendes Metallteil anliegt und dass das Metallteil mit dem Kolben verbunden ist. Das Verbinden des Metallteils mit dem Kolben kann davon unabhängig vorzugsweise durch Verpressen oder Schweißen erfolgen.

In Abhängigkeit von den Dichtanforderungen und dem Einbauort kann die Dichtung gezielt angepasst werden. In einfacher Weise kann dies durch die Dicke des Dichtungskörpers erfolgen, wobei als Dichtungskörper der Teil der Dichtung verstanden wird, der außerhalb des Kolbens angeordnet ist. Hierbei hat sich gezeigt, dass eine Dicke vom 0,3 mm bis 5 mm, vorzugsweise von 0,5 mm bis 3 mm vorteilhaft ist.

Die Verbindung des Kolbens mit dem Stift kann entweder durch Schweißen oder Vernieten erfolgen. Beide Verbindungsarten haben den Vorteil, dass der Kolben direkt und somit ohne ein zusätzliches Bauteil mit dem ebenfalls aus Metall bestehenden Stift verbunden werden kann. Im Gegensatz zu einem Kunststoffkolben, dessen Verbindung mit dem Stift ein zusätzliches Verbindungsteil benötigt.

Aufgrund der höheren Stabilität von Metall gegenüber Kunststoff, kann die Wandstärke des Kolbens deutlich geringer ausgebildet werden. In Abhängigkeit vom Einsatzgebiet hat es sich als vorteilhaft herausgestellt, wenn das Metall des Kolbens eine Dicke von 0,3 mm bis 0,8 mm, vorzugsweise von 0,4 mm bis 0,6 mm und insbesondere von 0,5 mm besitzt. Dabei wird durch die geringere Wandstärke eines Metallkolbens gegenüber einem Kolben aus Kunststoff die höhere Dichte von Metall gegenüber Kunststoff kompensiert, so dass das Gewicht des Ventils nicht wesentlich beeinflusst wird.

An einem Ausführungsbeispiel wird die Erfindung näher beschrieben. Es zeigt in
- Fig. 1: eine Schnittdarstellung des Ventils nach dem Stand der Technik,
- Fig. 2: eine vergrößerte Schnittdarstellung des Kolbens eines erfindungsgemäßen Ventils,
- Fig. 3: eine Draufsicht in den Kolben,
- Fig. 4: ein Beispiel eines Kolbens im Schnitt und
- Fig. 5, 6: eine Ausführung der Dichtungsverbindung mit dem Kolben.

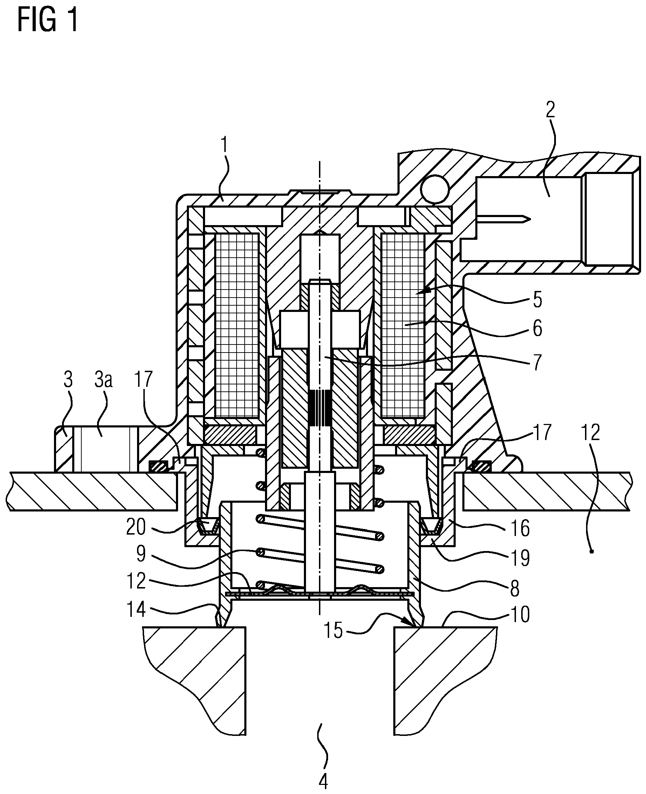

Figur 1 zeigt das Ventil, umfassend ein Gehäuse 1 mit einteilig angeformter Buchse 2 zum elektrischen Verbinden des Ventils. Das Gehäuse 1 besitzt weiter einen angeformten Flansch 3 und drei Bohrungen 3a, über die das Gehäuse 1 an einem nicht dargestellten Turbolader im Bereich der Bypassleitung 4 angeflanscht ist. In dem Gehäuse 1 ist ein Solenoid 5 mit einer Spule 6 und einem Metallstift 7 angeordnet. Der Metallstift 7 ist mit einem topfförmigen Kolben 8 verbunden. Eine Feder 9 spannt den Kolben 8 im unbetätigten Zustand des Solenoids 5 gegen einen Ventilsitz 10 vor, um die Bypassleitung 4 zu verschließen, so dass kein Medium aus und von der Bypassleitung 4 in die Leitung 11 strömen kann. Die Feder 9 stützt sich dabei am Solenoid 5 und am Kolben 8 ab, wobei der Kolben 8 in seinem Boden 12 eine konzentrische Sicke 13 zur Zentrierung der Feder 9 aufweist. Der Kolben 8 besitzt eine Wandstärke von 0,5 mm. An der Außenseite des Bodens 12 ist eine axial abstehende ringförmige Dichtung 14 aus PPA angeordnet. In der gezeigten Schließstellung liegt die Dichtfläche 15 auf dem Ventilsitz 10 an. Das Gehäuse 1 ist mit einer aus Kunststoff bestehenden Schutzhülse 16 mittels einer Rastverbindung 17 verbunden. Im Bereich der Rastverbindung 17 ist im Gehäuse 1 noch eine Dichtung 18 angeordnet, mit der das Gehäuse 1 gegen den Turbolader abgedichtet wird. Die Schutzhülse 16 ist ein im Wesentlichen zylindrisches Bauteil, welches auf der der Rastverbindung 17 abgewandten Seite einen radial nach innen weisenden Kragen 19 aufweist. Auf dem Kragen 19 sitzt eine radial umlaufende Dichtung 20 mit V-förmigem Querschnitt auf. Eine sich vom Solenoid 5 in Richtung Kolben 8 erstreckende, einteilig mit dem Gehäuse 1 ausgebildete Buchse hält die Dichtung 20 am Kragen 19 in ihrer Position.

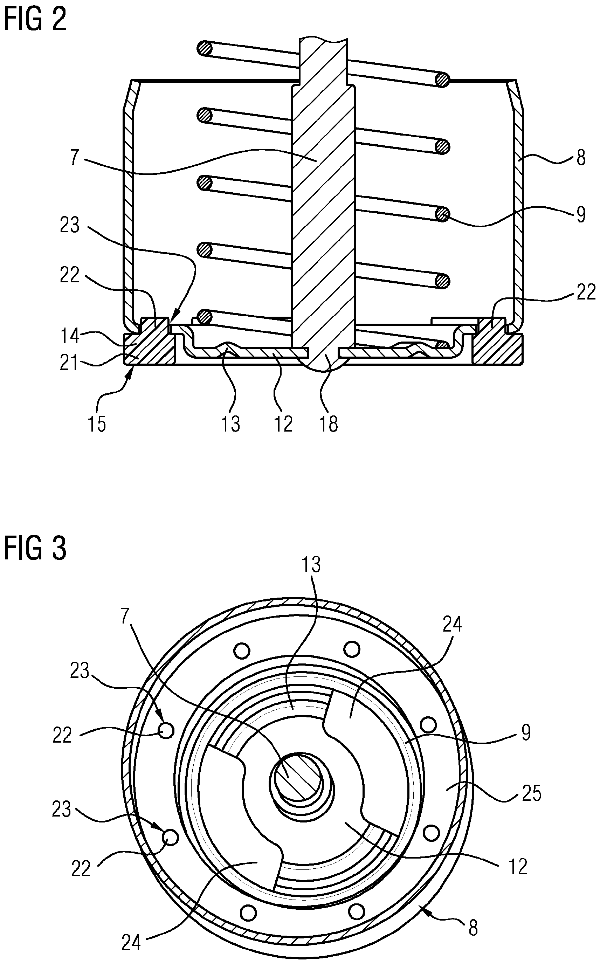

Figur 2 zeigt den Kolben 8 aus einem Chrom-Nickel-Stahl, der mittels einer Nietverbindung 18 mit seinem Boden 12 und seiner zylindrischen Mantelfläche verbunden sein. Im Innern des Kolbens 8 ist die Feder 9 gezeigt, die durch die Sicke 13 zentriert wird. Im Bereich der Dichtung 14 springt der Boden 12 in Richtung Gehäuse zurück. Dadurch wird vermieden, dass durch die axial vorstehende Dichtung 14 zusätzlicher Bauraum benötigt wird. Die Dichtung 14 besteht aus einem Dichtkörper 21 mit der Dichtfläche 15. Der Dichtkörper 21 besitzt gleichmäßig über den Umfang verteilte Anformungen 22. Die Anformungen 22 besitzen eine zylindrische Form und ragen durch Ausnehmungen 23 im Boden 12 des Kolbens 8. Mittels Heißverstemmen lassen sich diese Anformungen 22 plastisch derart verformen, dass Materialanhäufungen mit einem größeren Durchmesser als die Ausnehmungen 23 entstehen. Auf diese Weise wird die Dichtung 14 sicher am Kolben 8 gehalten.

Figur 3 zeigt den Kolben 8 aus Sicht des Gehäuses mit der Feder 9, der Sicke 13 zur Zentrierung der Feder 9 und dem Metallstift 7. Zwei Öffnungen 24 im Boden 12 des Kolbens 8 ermöglichen einen Druckausgleich zwischen dem Inneren des Kolbens 8 und der Bypassleitung 4, wodurch das Öffnen des Ventils erleichtert wird. Im radial umlaufenden Absatz 25 sind acht gleichmäßig verteilte Ausnehmungen 23 angeordnet, durch die jeweils eine Anformung 22 der Dichtung 14 in Innere des Kolbens 8 hineinragt.

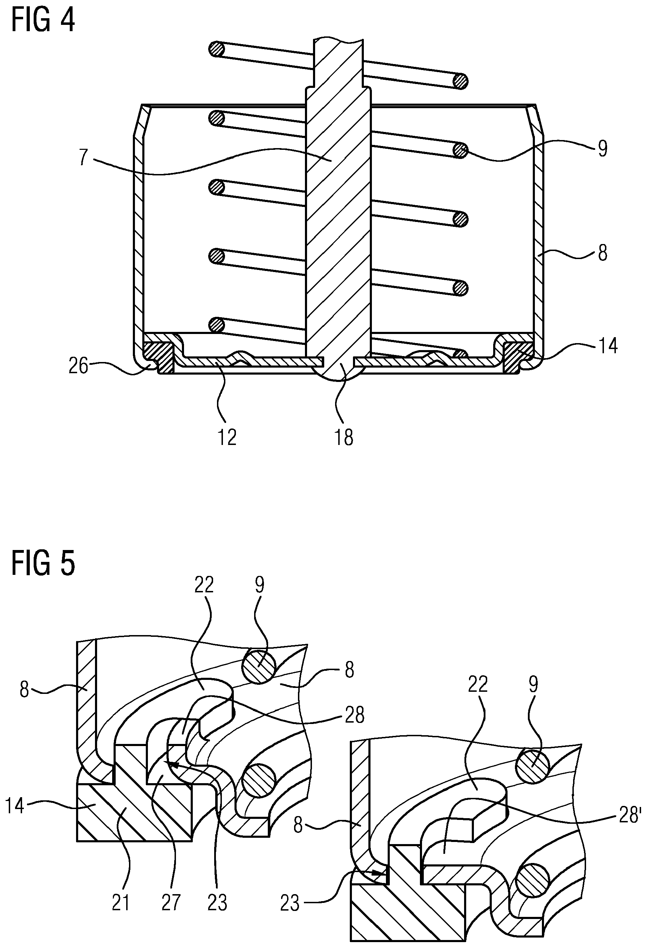

Figur 4 zeigt ein Beispiel eines Kolbens 8 mit einem Metallteil als separater Boden 12 und der Dichtung 14. Der Kolben 8 besitzt im Wesentlichen eine zylindrische Form mit einer nach innen gerichteten Umbördelung 26. Auf dieser liegt die Dichtung 14 auf. Auf der Dichtung 14 ist der Boden 12 aufgesetzt und mit dem Kolben 8 verschweißt, wodurch die Dichtung 14 zwischen Boden 12 und Kolben 8 geklemmt und somit in ihrer Lage fixiert ist.

Figur 5 zeigt die Dichtung 14 mit dem Grundkörper 21 und den Anformungen 22, die eine Ausnehmung 27 aufweisen. Eine Lasche 28 am Boden 12 ist zunächst in Richtung Gehäuse gebogen, um ein Einsetzen der Dichtung 14 zu ermöglichen. Anschließend wird die Lasche 28' umgebogen, wobei sie in die Ausnehmung 27 eingreift und so die Dichtung 14 fixiert.

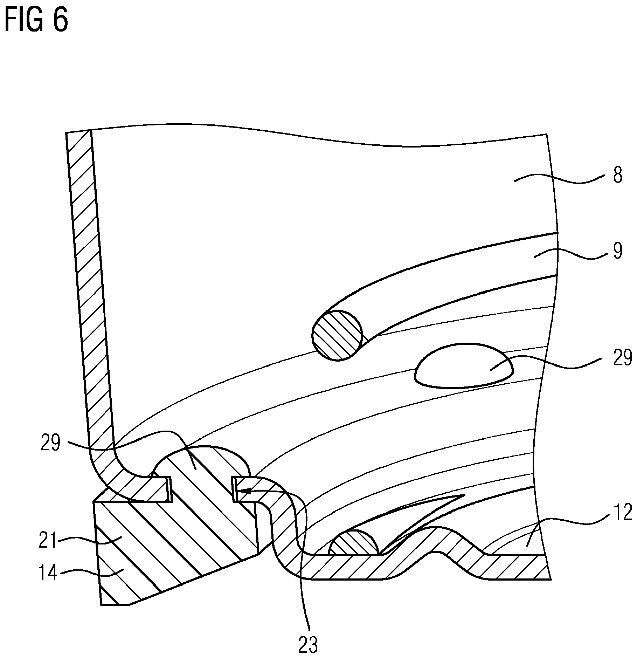

Figur 6 zeigt die Befestigung der Dichtung 14 mittels Warmverstemmen, wobei eine Materialanhäufung 29 der Anformungen 22 derart erzeugt wird, dass der Durchmesser größer als die jeweilige Ausnehmung 23 ist.

## Patentansprüche

1. Ventil mit einem Gehäuse, einem in dem Gehäuse angeordneten Solenoid, einem von dem Solenoid bewegbaren Stift, einem mit dem Stift verbundenen Kolben und einer Dichtung, **dadurch gekennzeichnet, dass** der Kolben (8) aus Metall besteht und eine Dichtung (14) aus einem vom Kolben (8) verschiedenen Material besitzt, wobei die Dichtung (14) im Bodenbereich des Kolbens (8) angeordnet ist, das Metall des Kolbens (8) eine Dicke von 0,3 mm bis 0,8 mm besitzt und die Dichtung (14) ringförmig ausgebildet ist und an ihrer der Dichtfläche (15) abgewandten Seite mindestens 3 Anformungen (22) besitzt, die Ausnehmungen (23) durchdringen, die im Boden (12) des Kolbens (8) angeordnet sind.

2. Ventil nach Anspruch 1, **dadurch gekennzeichnet, dass** der Kolben (8) aus Edelstahl, vorzugsweise einem Chrom-Nickel-Stahl, besteht.

3. Ventil nach Anspruch 1 oder 2, **dadurch gekennzeichnet, dass** die Dichtung (14) aus einem Gummi, vorzugsweise EPDM, oder einem Kunststoff, vorzugsweise PPA, besteht.

4. Ventil nach Anspruch 1, **dadurch gekennzeichnet, dass** die Anformungen (22) an ihrem freien Ende eine mit der Herstellung der Dichtung (14) oder durch nachträgliches Heißverstemmen erzeugbare Materialanhäufung (29) aufweisen, wobei die Materialanhäufung (29) einen Hinterschnitt zu der jeweiligen Ausnehmung (23) im Kolben (8) bildet.

5. Ventil nach Anspruch 3, **dadurch gekennzeichnet, dass** der Kolben (8) im Bereich des Bodens (12) eine nach innen gerichtete Umbördelung (26) besitzt, dass die Dichtung (14) an dieser Umbördelung (26) anliegt, dass auf der der Umbördelung (26) abgewandten Seite der Dichtung (14) ein den Boden des Kolbens (8) bildendes Metallteil (12) anliegt und dass das Metallteil (12) mit dem Kolben (8) verbunden ist.

6. Ventil nach zumindest einem der vorhergehenden Ansprüche, **dadurch gekennzeichnet, dass** der außerhalb des Kolbens (8) befindliche Teil der Dichtung (21) eine Dicke vom 0,5 mm bis 10 mm, vorzugsweise von 1 mm bis 5 mm besitzt.

7. Ventil nach Anspruch 5, **dadurch gekennzeichnet, dass** der Kolben (8) mit dem Metallteil (12) verschweißt ist.

8. Ventil nach zumindest einem der vorhergehenden Ansprüche, **dadurch gekennzeichnet, dass** der Kolben (8) mit dem Stift (7) verschweißt ist.

9. Ventil nach zumindest einem der vorhergehenden Ansprüche 1 bis 6, **dadurch gekennzeichnet, dass** der Kolben (8) mit dem Stift (7) vernietet ist.

## Claims

1. Valve having a housing, a solenoid arranged in the housing, a pin movable by the solenoid, a piston connected to the pin, and a seal, **characterized in that** the piston (8) is composed of metal and has a seal (14) composed of a different material than the piston (8), wherein the seal (14) is arranged in the crown region of the piston (8), the metal of the piston (8) has a thickness of 0.3 mm to 0.8 mm and the seal (14) is of annular form and, on its side facing away from the sealing surface (15), has at least 3 integral moldings (22) which extend through apertures (23) which are arranged in the crown (12) of the piston (8) .

2. Valve according to Claim 1, **characterized in that** the piston (8) is composed of high-grade steel, preferably a chromium-nickel steel.

3. Valve according to Claim 1 or 2, **characterized in that** the seal (14) is composed of a rubber, preferably EPDM, or a plastic, preferably PPA.

4. Valve according to Claim 1, **characterized in that** the integral moldings (22) have, at their free end, a material accumulation (29) which can be generated with the production of the seal (14) or by retroactive hot calking, wherein the material accumulation (29) forms an undercut with respect to the respective aperture (23) in the piston (8).

5. Valve according to Claim 3, **characterized in that** the piston (8) has an inwardly directed flanged portion (26) in the region of the crown (12), **in that** the seal (14) bears against said flanged portion (26), **in that** a metal part (12) which forms the crown of the piston (8) bears against that side of the seal (14) which is averted from the flanged portion (26), and **in that** the metal part (12) is connected to the piston (8).

6. Valve according to at least one of the preceding claims, **characterized in that** that part of the seal (21) which is situated outside the piston (8) has a thickness of 0.5 mm to 10 mm, preferably of 1 mm to 5 mm.

7. Valve according to Claim 5, **characterized in that** the piston (8) is welded to the metal part (12).

8. Valve according to at least one of the preceding claims, **characterized in that** the piston (8) is welded to the pin (7).

9. Valve according to at least one of the preceding Claims 1 to 6, **characterized in that** the piston (8) is riveted to the pin (7) .

## Revendications

1. Vanne, comprenant un corps, un solénoïde disposé dans le corps, et une tige pouvant être déplacée par le solénoïde, un piston relié à la tige et un joint d'étanchéité, **caractérisée en ce que** le piston (8) est composé de métal et possède un joint d'étanchéité (14) d'un matériau différent de celui du piston (8), dans laquelle le joint d'étanchéité (14) est disposé dans la zone de fond du piston (8), le métal du piston (8) possède une épaisseur de 0,3 mm à 0,8 mm, et le joint d'étanchéité (14) est réalisé en forme de bague et possède au moins 3 appendices (22) sur sa face détournée de la surface d'étanchéité (15) et qui traversent des évidements (23) qui sont disposés dans le fond (12) du piston (8).

2. Vanne selon la revendication 1, **caractérisée en ce que** le piston (8) est composé d'acier spécial, de préférence d'un acier au nickel-chrome.

3. Vanne selon la revendication 1 ou 2, **caractérisée en ce que** le joint d'étanchéité (14) est composé d'un caoutchouc, de préférence d'EPDM, ou d'une matière plastique, de préférence de PPA.

4. Vanne selon la revendication 1, **caractérisée en ce que** les appendices (22) présentent à leur extrémité libre une accumulation de matière (29) pouvant être créée par la fabrication du joint d'étanchéité (14) ou par un matage à chaud ultérieur, l'accumulation de matière (29) formant une contre-dépouille par rapport à l'évidement (23) respectif dans le piston (8).

5. Vanne selon la revendication 3, **caractérisée en ce que** le piston (8) possède au niveau du fond (12) un bord rabattu (26) tourné vers l'intérieur, **en ce que** le joint d'étanchéité (14) est appliqué contre ce bord rabattu (26), **en ce que** sur la face, détournée du bord rabattu (26), du joint d'étanchéité (14), une pièce métallique (12) formant le piston (8) est appliquée, et **en ce que** la pièce métallique (12) est reliée au piston (8).

6. Vanne selon au moins l'une des revendications précédentes, **caractérisée en ce que** la partie du joint d'étanchéité (21) située à l'extérieur du piston (8) possède une épaisseur de 0,5 mm à 10 mm, de préférence de 1 mm à 5 mm.

7. Vanne selon la revendication 5, **caractérisée en ce que** le piston (8) est soudé avec la pièce métallique (12).

8. Vanne selon au moins l'une des revendications précédentes, **caractérisée en ce que** le piston (8) est soudé avec la tige (7).

9. Vanne selon au moins l'une des revendications précédentes 1 à 6, **caractérisée en ce que** le piston (8) est riveté avec la tige (7).
